# EUROPEAN PATENT SPECIFICATION

(11) **EP 0 479 610 B1**
(45) Date of publication and mention of the grant of the patent: **18.12.1996**
(21) Application number: 91309127.8
(22) Date of filing: 04.10.1991
(51) Int. Cl.: H04N 5/91, H04N 5/44

(54) **Television receiver**
Fernsehempfänger
Récepteur de télévision

(30) Priority: 05.10.1990 JP 267580/90
(43) Date of publication of application: 08.04.1992
(73) Proprietor: SONY CORPORATION, Tokyo (JP)
(72) Inventor: Tsunetomi, Yoshinobu, Shinagawa-ku, Tokyo (JP); Sarugaku, Toshio, Shinagawa-ku, Tokyo (JP)
(74) Representative: Ayers, Martyn Lewis Stanley

(56) References cited:
- EP-A- 0 256 753
- PATENT ABSTRACTS OF JAPAN vol. 12, no. 430 (E-682)14 November 1988 & JP-A-63 166 372
- IEEE TRANSACTIONS ON CONSUMER ELECTRONICS vol. 36, no. 3, August 1990, NEW YORK US pages 699 - 706 IMAIZUMI ET AL. 'Development of Multifunctional NTSC System Single-Chip LSI for Higher Picture and Sound Quality'
- ELEKTOR ELECTRONICS vol. 14, no. 160, October 1988, CANTERBURY GB pages 44 - 47 'Macrovision Decoder/Blanker'

## Description

The present invention relates to a television receiver for receiving a copy-protected video signal from, for example, a video tape recorder (VTR).

In order to protect the copy-right in software, for example, video tape software, it has been proposed to distribute such video tape software recorded as a signal, which is formed by adding a particular signal (herein "copy guard signal") to a part of the video signal to be recorded on the video tape. The copy guard signal is intended to ensure that the quality of a recording signal cannot be maintained when the video signal on the video tape is reproduced by a VTR and then rerecorded on another video tape. See, for example, Japanese Laid-Open Patent Publication JP-A-61288582.

It is important, however, that the copy-protected video signal can be displayed on a television receiver without any trouble. However, when the video signal in the above-mentioned document is applied to a television receiver, a signal formed to have a level directed to the level of the sync. (synchronizing) signal may erroneously operate an automatic frequency control (AFC) circuit. This is because the particular signal used for copy protection is formed by modulating the level of a video signal during a predetermined horizontal sync. period within a vertical blanking period. When this signal is applied to a television receiver provided with a system for digitally processing the video signal, the AFC circuit thereof is caused to operate incorrectly so that the digital processing cannot be performed satisfactorily.

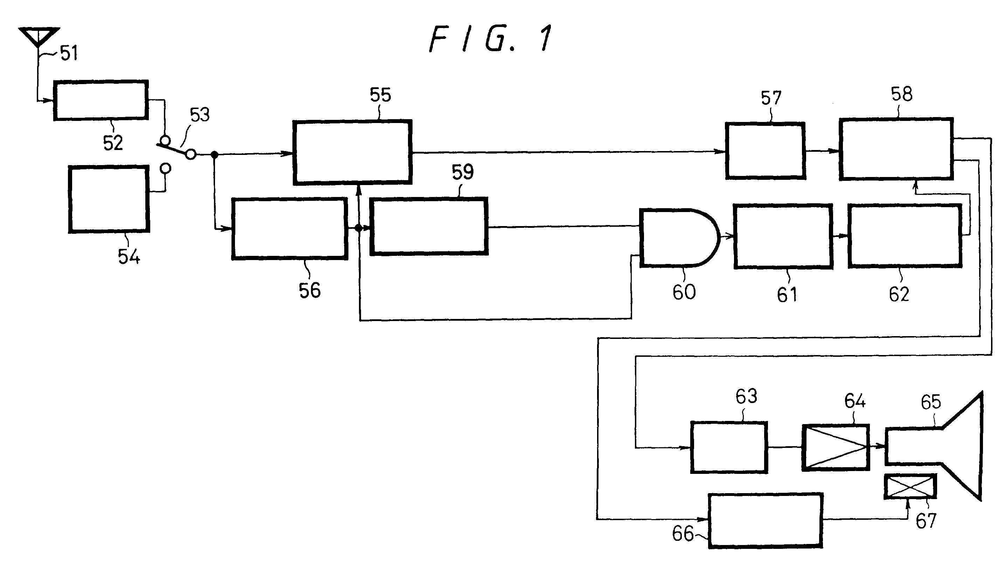

Thus, the conventional television receiver is provided with two AFC circuits connected in cascade as shown in Figure 1 of the accompanying drawings in order to prevent this erroneous operation. A signal from an antenna 51 is applied to a tuner 52 which in turn selectively receives a desired broadcasting signal and extracts the video signal content from the desired broadcasting signal to thereby apply it to one fixed contact of a switch 53. A reproduced video signal from a VTR 54 is applied to the other fixed contact of the switch 53.

One of the video signals selected by the switch 53 is applied to a video signal processor 55 and also to a sync. separator 56 which in turn separates a sync. signal from the video signal and applies the sync. signal to the video signal processor 55 to demodulate the video signal. The demodulated video signal is applied to a digital processor 58 through an analog-to-digital (A/D) converter 57.

A horizontal sync. signal separated by the sync. separator 56 is applied to a first AFC circuit 59, then both an output signal from the first AFC circuit 59 and the sync. signal from the sync. separator 56 are applied to an AND circuit 60 to thereby gate the sync. signal from the sync. separator 56 in response to the signal from the AFC circuit 59. The gated signal from the AND circuit 60 is applied to a second AFC circuit 61.

An output signal from the second AFC circuit 61 is provided to a clock generator 62, an output clock signal from which is applied to the digital processor 58.

An output video signal from the digital processor 58 is applied to a video amplifier 64 through a digital-to-analog (D/A) converter 63, and then an output signal from the amplifier 64 is applied to a picture tube 65 such as a cathode ray tube (CRT). The sync. signal from the digital processor 58 is applied to a deflector 66, which in turn applies a driving signal to a deflection coil 67 of the CRT 65.

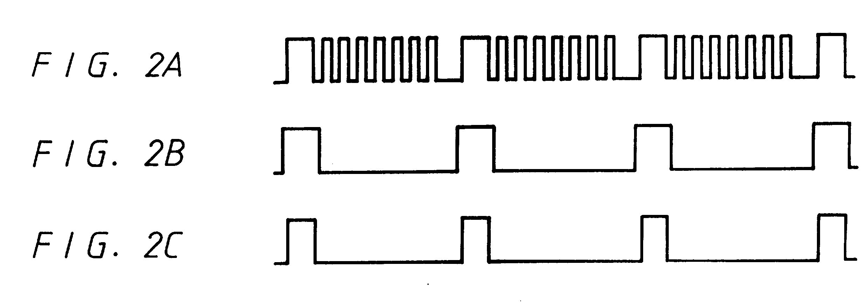

With the thus constructed conventional television receiver, when the video signal of the above-mentioned document is applied to the receiver, a signal as shown in Figure 2A is separated from the video signal by the sync. separator 56 and applied to the first AFC circuit 59 which in turn delivers a signal shown in Figure 2B. The first AFC circuit 59 is set to have a slightly slow response speed, so that it does not respond to the signal portion modulated for copy guard to thereby deliver a signal almost corresponding the position of the horizontal sync. signal, which in turn is applied to the AND circuit 60 to gate the signal from the sync. separator 56, so that the AND circuit 60 outputs a true horizontal sync. signal shown in Figure 2C.

Accordingly, the second AFC circuit 61 can perform the AFC operation satisfactorily without causing erroneous operation, so that good digital processing of the video signal can be achieved.

However, when there is a skew distortion in the reproduced video signal from, for example, the VTR, the signal from the first AFC circuit 59 differs in phase from the horizontal sync. signal during the delay of response in the first AFC circuit 59, so that the true horizontal sync. signal cannot be derived from the AND circuit 60. Further, as the output signal from the AND circuit 60 passes through the second AFC circuit 61 which has a slightly slow response speed, due to the delay of response in these AFC circuits, it takes much time till the normal AFC operations can be performed in these AFC circuit. This makes it impossible to perform digital processing satisfactorily during these response delay periods.

This response delay time is within almost one vertical blanking period in the conventional television receiver, but in a television receiver of Phase-Alternation by Line (PAL) system so-called flicker free television receiver wherein the vertical scanning speed is twice that of the National Television System Committee (NTSC) system, the vertical blanking period is reduced so that the response delay time may not fall within the vertical blanking period which is disadvantageous.

If the response speed of the first AFC circuit 59 is increased, the operation of the AFC circuit 59 itself is distorted by the copy guard modulation so that the AFC circuit cannot perform the AFC operation satisfactorily.

Accordingly, it is a general object of the present invention to provide an improved television receiver in which the aforementioned shortcomings and disadvantages of the prior art can be reduced or eliminated.

According to the present invention there is provided a television receiver including automatic frequency controlling (AFC) means for forming a clock signal synchronized with a horizontal synchronising signal, and comprising a synchronising separator for separating said horizontal synchronising signal from a video signal which may be copy-protected by a copy-guard signal, and removing means for removing said copy guard signal from said horizontal synchronising signal, said automatic frequency controlling (AFC) means being supplied with a synchronising signal from which said removing means has removed said copy guard signal or which was not modulated for copy-guard, characterised in that the television receiver further comprises detecting means for detecting whether said horizontal synchronising signal is modulated for a copy guard signal, and said removing means is responsive to said detecting means to remove the copy-guard signal from said horizontal synchronising signal when said detecting means detect that said horizontal synchronising signal is modulated for copy guard.

In the hereinafter described embodiment of the present invention, when a sync. signal modulated for copy guard is detected, the AFC circuit is supplied with a horizontal signal from which the horizontal sync. signal portion modulated for the copy guard during a predetermined horizontal period has been removed, so that the television receiver can perform the AFC operation which is not distorted and not delayed by the copy guard modulated signal and achieves a simplified construction.

The invention will be further described by way of non-limitative example with reference to the accompanying drawings, in which :-
Figure 1 is a block diagram illustrating the circuitry of a conventional television receiver;
Figures 2A through 2C are diagrams illustrating waveforms at various portions in Figure 1;
Figure 3 is a block diagram illustrating an embodiment of a television receiver according to the present invention;
Figure 4 is a circuit diagram illustrating a main portion of the television receiver in Figure 3;
Figures 5A through 5C are diagrams illustrating waveforms at various portions of Figure 4; and
Figure 6 is a block diagram illustrating a main portion of another embodiment of the present invention.

Preferred embodiments of the present invention will now be described with reference to the accompanying drawings.

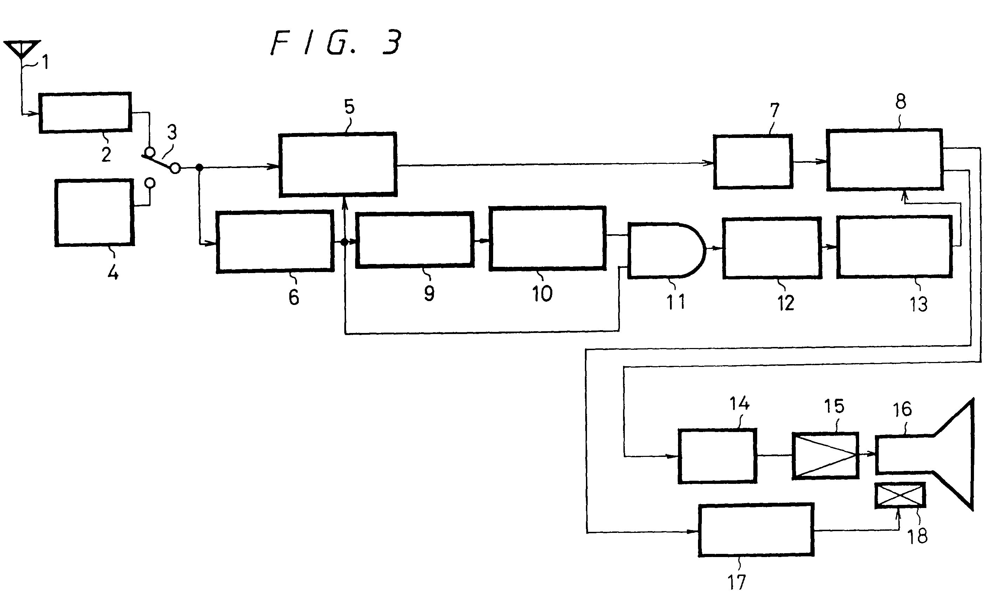

Referring now to Figure 3 illustrating a first embodiment of a television receiver according to the present invention, a signal from an antenna 1 is applied to a tuner 2 which in turn selectively receives a desired broadcasting signal and extracts the video signal of the desired broadcasting channel and applies it to one fixed contact of a switch 3. A reproduced video signal from a VTR 4 is applied to the other fixed contact of the switch 3.

One of the video signals selected by the switch 3 is applied to a video processor 5 and also to a sync. separator circuit 6 which in turn separates a sync. signal from the video signal and applies the thus separated sync. signal to the video processor 5 to demodulate the video signal. The demodulated video signal is applied to a digital processor 8 through an A/D converter 7.

A horizontal sync. signal separated by the sync. separator 6 is applied to an integrator 9 for discriminating the demodulation for the copy guard, whose output is applied to a level detector 10. Both an output signal from the level detector 10 and the signal from the sync. separator 6 are applied to an AND circuit 11 to thereby gate the signal from the sync. separator 6 in response to the signal from the level detector 10. The gated signal from the AND circuit 11 is applied to an AFC circuit 12. Unlike the circuit of Figure 1, the AFC 12 is not designed to have a slower than normal response time.

An output signal from the AFC circuit 12 is provided to a clock generator 13, an output clock signal from which is applied to the digital processor 8.

An output video signal from the digital processor 8 is applied via a D/A connector 14 to a video amplifier 15 whose output is applied to a CRT 16. The sync. signal from the digital processor 8 is applied to a deflector 17, which in turn applied a driving signal to a deflection coil 18 of the CRT 16.

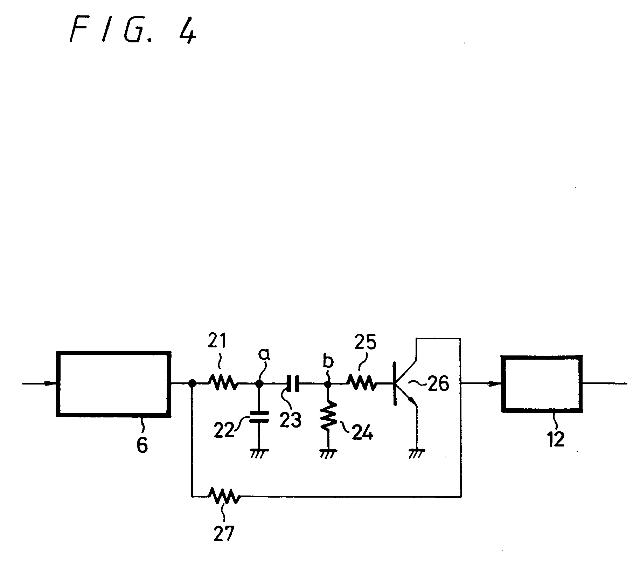

Referring to Figure 4 illustrating more practically a circuit between the sync. separator 6 and the AFC circuit 12, namely, the integrator 9 to the AFC circuit 11, an output terminal of the sync. separator 6 is grounded through the series circuit of a resistor 21 and a capacitor 22 constituting the integrator 9, a connection point a between the resistor 21 and the capacitor 22 is grounded via a capacitor 23 and a resistor 24, and then a connection point b between the capacitor 23 and the resistor 24 is connected to a base of a npn transistor 26 via a resistor 25. An emitter of the transistor 26 is grounded, while its collector is connected to the output terminal of the sync. separator 6 via a resistor 27 and also to the AFC circuit 12.

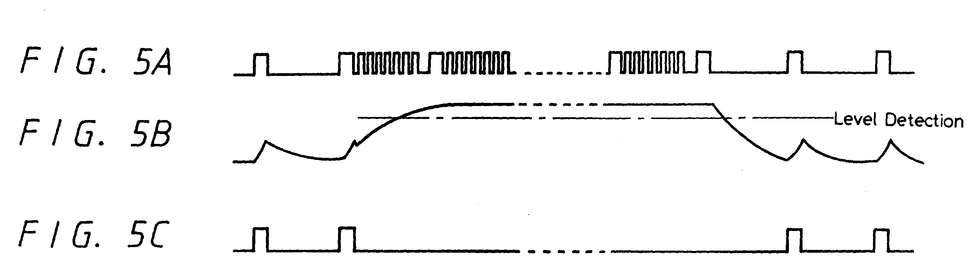

When a video signal having the particular copy guard signal is applied to the receiver, the signal shown in Figure 5A is separated from the video signal by the sync. separator 6 and then applied to the integrator 9, so that the signal shown in Figure 5B can be taken from the connection point a between the resistor 21 and the capacitor 22. The signal from the connection point a is applied to the transistor 26 to gate the signal from the sync. separator 6, so that the AND circuit 11 delivers a true horizontal sync. signal shown in Figure 5C where a horizontal sync. signal modulated for the copy guard during the predetermined horizontal period is removed.

Thus, the AFC circuit 12 maintains the frequency of the true horizontal sync. signal applied thereto before the appearance of the modulated signal for the copy guard during the interval where the horizontal sync. signal is removed, so that the operation of the AFC circuit 12 is not distorted by the presence of the copy guard modulation and so digital processing etc. of the signal can be performed satisfactorily. The circuitry involved is simple in construction.

Further, even if there is a skew distortion in the reproduced video signal from the VTR, the true horizontal sync. signal is applied to the AFC circuit 12 without being delayed due to the phase difference etc., so that the AFC operation can be performed with the minimum delay of response, and this due only to the AFC circuit 12.

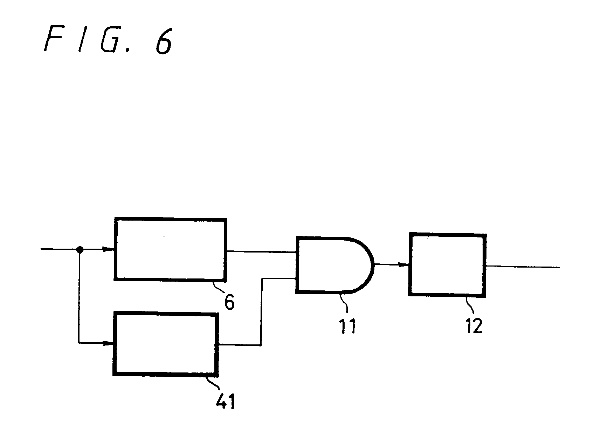

Referring now to Figure 6 illustrating a main portion of a second embodiment, the discrimination of the modulation for the copy guard is performed in such a manner that, instead of applying the horizontal sync. signal separated by the sync. separator 6 to the integrator 9 as described in the first embodiment, a video signal at an input terminal of the sync. separator 6 is applied to a discriminator 41 for discriminating the modulation for the copy guard by detecting, for example, a white level of the horizontal sync. signal modulated for the copy guard, and then output signals of the discriminator 41 and the sync. separator 6 are applied to the AND circuit 11.

The discriminator for discriminating the modulation for the copy guard may be modified in various manners.

## Claims

1. A television receiver including automatic frequency controlling (AFC) means (12) for forming a clock signal synchronized with a horizontal synchronising signal, and comprising
a synchronising separator (6) for separating said horizontal synchronising signal from a video signal which may be copy-protected by a copy-guard signal, and
removing means (11) for removing said copy guard signal from said horizontal synchronising signal,
said automatic frequency controlling (AFC) means (12) being supplied with a synchronising signal from which said removing means (11) has removed said copy guard signal or which was not modulated for copy-guard,
characterised in that
the television receiver further comprises detecting means (9,10;41) for detecting whether said horizontal synchronising signal is modulated for a copy guard signal, and
said removing means (11) is responsive to said detecting means (9,10; 41) to remove the copy-guard signal from said horizontal synchronising signal when said detecting means (9,10; 41) detect that said horizontal synchronising signal is modulated for copy guard.

2. A television receiver according to claim 1, wherein said removing means comprises means (11) for gating said horizontal synchronising signal with the signal from said detecting means (9, 10; 41).

3. A television receiver according to claim 1 or 2, wherein said detecting means comprises
means (9) for integrating said copy-guard-modulated horizontal synchronising signal modulated for copy guard, and
means (10) for detecting the level of an output signal from said integrating means.

4. A television receiver according to claim 1 or 2 wherein said detecting means comprises means (41) for detecting a white level of said horizontal synchronising signal so as to detect whether it is modulated for copy guard.

5. A television receiver according to any one of the preceding claims, further comprising
a clock generator (13) coupled to said AFC means (12),
a video processor (5) for processing the video signal and said synchronising signal,
an analog-to-digital (A/D) converter (7) coupled to said video processor (5); and
a digital processor (8) for processing the digital signal from said A/D converter (7) and the clock signal from said clock generator (13).

6. A television receiver according to any one of the preceding claims, wherein said automatic frequency controlling means (AFC) comprises a single AFC circuit (12) having a normal response time.

## Patentansprüche

1. Fernsehempfänger mit einer automatischen Frequenzsteuereinrichtung (AFC) (12) zum Formen eines Taktsignals, welches mit einem Horizontal-Synchronisationssignal synchronisiert ist, mit:
einem Synchronisations-Separator (6) zur Trennung des Horizontal-Synchronisationssignals von einem Videosignal, welches durch ein Kopiersicherungssignal kopiergeschützt sein kann,
und einer Beseitigungseinrichtung (11), um das Kopiersicherungssignal aus dem Horizontal-Synchronisationssignal zu beseitigen,
wobei die automatische Frequenzsteuereinrichtung (AFC) (12) mit einem Synchronisationssignal beliefert wird, aus dem die Beseitigungseinrichtung (11) das Kopiersicherungssignal beseitigt hat oder welches nicht zur Kopiersicherung moduliert wurde,
**dadurch gekennzeichnet, daß**
der Fernsehempfänger außerdem eine Ermittlungseinrichtung (9, 10; 41) aufweist, um zu ermitteln, ob das Horizontal-Synchronisationssignal für ein Kopiersicherungssignal moduliert ist, und
die Beseitigungseinrichtung (11) auf die Ermittlungseinrichtung (9, 10; 41) anspricht, um das kopiergesicherte Signal aus dem Horizontal-Synchronisationssignal zu beseitigen, wenn die Ermittlungseinrichtung (9, 10; 41) ermittelt, daß das Horizontal-Synchronisationssignal zur Kopiersicherung moduliert ist.

2. Fernsehempfänger nach Anspruch 1, wobei die Beseitigungseinrichtung eine Einrichtung (11) umfaßt, um das Horizontal-Synchronisationssignal mit dem Signal von der Ermittlungseinrichtung (9, 10; 41) freizugeben.

3. Fernsehempfänger nach Anspruch 1 oder 2, wobei die Ermittlungseinrichtung aufweist:
eine Einrichtung (9) zur Integrierung des kopiergeschützten-modulierten Horizontal-Synchronisationssignals, welches zur Kopiersicherung moduliert ist, und
eine Einrichtung (10) zur Ermittlung des Pegels eines Ausgangssignals von der Integriereinrichtung.

4. Fernsehempfänger nach Anspruch 1 oder 2, wobei die Ermittlungseinrichtung eine Einrichtung (41) umfaßt, um einen Weißpegel des Horizontal-Synchronisationssignals zu ermitteln, um damit zu ermitteln, ob es zur Kopiersicherung moduliert ist.

5. Fernsehempfänger nach einem der vorhergehenden Ansprüche, der außerdem aufweist:
einen Taktgenerator (13), der mit der AFC-Einrichtung (12) gekoppelt ist,
einen Videoprozessor (5), um das Videosignal und das Synchronisationssignal zu verarbeiten,
einen Analog-Digital-Umsetzer (A/D) (7), der mit dem Videoprozessor (5) gekoppelt ist; und
einen digitalen Prozessor (8), um das Digitalsignal vom A/D-Umsetzer (7) und das Taktsignal vom Taktgenerator (13) zu verarbeiten.

6. Fernsehempfänger nach einem der vorhergehenden Ansprüche, wobei die automatische Frequenzsteuereinrichtung (AFC) eine einzelne AFC-Schaltung (12) umfaßt, die eine normale Ansprechzeit hat.

## Revendications

1. Récepteur de télévision, comportant des moyens de commande automatique de fréquence (CAF) (12) pour former un signal d'horloge sychronisé sur le signal de synchronisation horizontale, et comprenant:
- un séparateur de synchronisation (6) pour séparer ledit signal de synchronisation horizontale d'un signal vidéo qui peut être protégé contre la copie par un signal de garde anti-copie; et
- des moyens d'élimination (11) pour éliminer ledit signal de garde anti-copie dudit signal de synchronisation horizontale,
lesdits moyens de commande automatique de fréquence (CAF) (12) recevant un signal de synchronisation dont lesdits moyens d'élimination (11) ont éliminé ledit signal de garde anti-copie ou qui n'était pas modulé pour la protection contre la copie,
caractérisé en ce que:
- le récepteur de télévision comprend en outre des moyens de détection (9, 10; 41) pour détecter si ledit signal de synchronisation horizontale est modulé par un signal de garde anti-copie; et
- lesdits moyens d'élimination (11) sont sensibles auxdits moyens de détection (9, 10; 41) pour éliminer le signal de garde anti-copie dudit signal de synchronisation horizontale lorsque lesdits moyens de détection 9, 10; 41) détectent que ledit signal de synchronisationi horizontale est modulé pour la protection contre la copie.

2. Récepteur de télévision selon la revendication 1, dans lequel lesdits moyens d'élimination comprennent des moyens (11) pour commander la transmission par porte dudit signal de synchronisation horizontale par le signal issu desdits moyens de détection (9, 10; 41).

3. Récepteur de télévision selon la revendication 1 ou 2, dans lequel lesdits moyens de détection comprennent:
- des moyens (9) pour intégrer ledit signal de synchronisation horizontale modulé pour la protection contre la copie; et
- des moyens (10) pour détecter le niveau du signal de sortie desdits moyens intégrateurs.

4. Récepteur de télévision selon la revendication 1 ou 2, dans lequel lesdits moyens de détection comprenent des moyens (41) pour détecter le niveau de blanc dudit signal de synchronisation horizontale de manière à détecter s'il est modulé pour la protection contre la copie.

5. Récepteur de télévision selon l'une quelconque des revendications précédentes, comprenant en outre:
- un générateur de signal d'horloge (13) connecté auxdits moyens de commande automatique de fréquence (CAF) (12);
- un processeur vidéo (5) pour traiter le signal vidéo et ledit signal de synchronisation;
- un convertisseur analogique/numérique (CAN) (7) connecté audit processeur vidéo (5); et
- un processeur numérique (8) pour traiter le signal numérique issu dudit convertisseur analogique/numérique (7) et le signal d'horloge issu dudit générateur de signal d'horloge (13).

6. Récepteur de télévision selon l'une quelconque des revendications précédentes, dans lequel lesdits moyens de commande automatique de fréquence (CAF) comprennent un circuit unique de commande automatique de fréquence (12) ayant un temps de réponse normal.
